# EUROPEAN PATENT SPECIFICATION

(11) **EP 2 592 707 B1**
(45) Date of publication and mention of the grant of the patent: **01.02.2017**
(21) Application number: 12192036.7
(22) Date of filing: 09.11.2012
(51) Int. Cl.: H02G 1/08, G02B 6/44

(54) **Method for adapting a communication network and a communication network**
Verfahren zur Anpassung eines Kommunikationsnetzwerks und ein Kommunikationsnetzwerk
Procédé d'adaptation d'un réseau de communication et réseau de communication

(30) Priority: 10.11.2011 NL 2007763
(43) Date of publication of application: 15.05.2013
(73) Proprietor: Draka Comteq B.V., 1083 HJ Amsterdam (NL)
(72) Inventor: Jonker, Jan Wigger, 9902 BK Appingedam (NL); Greven, Willem, 9933 AS Delfzijl (NL)
(74) Representative: V.O.

(56) References cited:
- DE-A1- 19 757 899
- JP-A- 2 101 911
- JP-A- 2002 247 724
- JP-A- 2002 354 621
- JP-A- 2004 173 439

## Description

This invention relates to a method for adapting a communication network. In addition, the invention relates to a communication network as such.

Communication networks are known from practice in diverse variants. A known net is provided with outer tubes, normally extending in the ground, each provided with inner tubes, which in themselves are provided with various cables having a signal conducting (copper) core. This network is also known by the name of 'Flashnet'. The Flashnet is used in particular for communication connections to end users (e.g., local communication means in buildings, houses, and the like, associated with end users). In an existing Flashnet, a number (e.g., one) of the inner tubes may be still empty, at least, not provided with a cable having a signal conducting core.

JP2002247724 describes a method for installing a communication cable, for instance in a sewer, wherein guide pipe is divided into different compartments to receive telecommunication cables (16), telephone lines (17), a main cable (28), and thin wires (22).

JP200417439 discloses a method in which an inflatable tube is passed to an end user via a subterranean pipe, to feed through a new cable.

It is desired to improve the known communication network, with the least possible inconvenience to end users of the network.

According to an aspect of the invention, there is provided a method for adapting a communication network, the network being at least provided with:
- a bundle of tubes, for instance, several tubes extending through a bundle holder, the bundle comprising several first tubes and a second tube;
- several first signal conductors, of a first conductor type, which are associated with network end users, and extend through the first tubes; and
- branches to pass the signal conductors to respective end users;
- wherein the second tube extends along the branches and does not contain a first signal conductor,
wherein the method is characterized in that at least one second signal conductor, of a second conductor type which differs from the first conductor type, is passed through the second tube, wherein the second signal conductor is associated with a network end user which is already provided with a first signal conductor.

In this manner the communication network can be adapted with particularly little inconvenience to the end users. In particular, new signal conductors can be installed, with utilization of an empty second tube (e.g., an empty inner tube which extends through an outer tube), at a time when respective end users are still in communication connection with the network (i.e., in that those end users are still connected to old signal conductors which extend through the first tubes of the tube bundle). After the new signal conductors are installed, as desired, one or more of the end users can be rapidly switched from communication via the old signal conductor(s) to communication via the new communication conductor(s).

An above-mentioned bundle of (first and second) tubes may be implemented in different manners. The bundle of tubes can comprise, for instance, a number of inner tubes extending through a bundle holder. Such a bundle holder can for instance be an outer tube, or comprise one or more sleeves (e.g., a single elongate sleeve or a series of sleeves), and/or comprise one or more binders, tape, a skin, and/or a combination of these or other bundle holders. Preferably, the first tubes and second tube are a bundle of mutually loose (i.e., not directly connected to each other) tubes.

An above-mentioned old signal conductor (i.e., a first signal conductor) may be configured, for instance, for transmitting electrical communication signals (and is, for instance, a cable having a copper core). An above-mentioned new signal conductor (i.e., a second signal conductor in replacement of communication via a first signal conductor) can be configured, for instance, for transmitting optical communication signals (and comprises, for instance, an optical fiber).

Thus, it follows that, according to a further elaboration of the invention, the second signal conductor is installed during a network operating period, in which period the respective network end user is in communication connection with the network via the respective first signal conductor.

Further, it is particularly advantageous if such second signal conductor is passed along several branches. In the use of a closed bundle holder, for instance an outer tube or the like, the bundle holder can be opened at a branch to the respective end user to access the respective second signal conductor, and to feed it through to the end user.

Each second signal conductor may during installation be passed, for instance, through the whole second tube, for instance in a loose bundle of second signal conductors. In this manner the signal conductor can be passed along a path that extends along several end users (and several branches to respective end users, i.e., end user locations). The path mentioned can be determined, for instance, by the tube bundle already installed. Subsequently, locally, at a branch to an end user (or end user location) to be transferred, one of the second signal conductors can be made available, and be passed via the branch to the end user. The making available of the second signal conductor comprises, for instance, the making available of a branch portion of that signal conductor, which signal conductor branch portion is passed (via the branch) to the end user. The signal conductor branch portion can for instance (locally, at the respective branch) be pulled out of the second tube, whether or not after separation from a remaining part of the respective second signal conductor (which remaining part, for instance, remains behind in the second tube). The thus branched-off portion of the second signal conductor can for instance be connected at the end user to suitable communication means (e.g., optical communication means, in the case where the second signal conductor is configured for communication with utilization of optical communication signals).

In addition, the end user may for instance be connected to a second signal conductor by installing a separate signal conductor, which is brought into communication connection with the second signal conductor available locally (at a respective branch to that end user). Bringing second signal conductors, for instance optical fibers, into communication connection is technology generally known per se, and comprises for instance fusion welding (splicing).

According to a further elaboration of the invention, an above-mentioned branch can comprise, for instance, a branch outer tube, having extending therethrough a first branch signal conductor (e.g., a cable having a copper core) which is associated with a first signal conductor (e.g., a cable having a copper core). The first branch signal conductor can extend, for instance, in a branch inner tube, which has been passed through the branch outer tube. During installation of the second signal conductor(s) the end user may for instance be connected to that particular first branch signal conductor. Advantageously, a second branch inner tube can then be passed through the branch outer tube, in which case for instance a branch portion of a second signal conductor is passed through the second branch inner tube for connection to the respective end user. Thereupon the end user can be rapidly, locally, transferred (to communication via the second signal conductor).

According to a further elaboration of the invention, at least as many second signal conductors are arranged in the second tube as the number of first signal conductors extending through the respective first tubes (i.e., of the same bundle). In this manner, the network can be rapidly provided with sufficient second signal conductors, to enable replacement of communication via respective first signal conductors at desired moments.

It is noted that it may be possible for the bundle of tubes to include different empty (i.e., not provided with a first signal conductor) second tubes, in addition to the first tubes provided with first signal conductors. In that case, for instance, at least as many second signal conductors can be arranged in the second tubes as the number of first signal conductors extending through the respective first tubes.

With advantage, (the) several second signal conductors may be arranged in a second tube simultaneously, for instance in a bundle, which enhances efficiency and increases installation speed.

According to an extra advantageous elaboration of the invention, each second signal conductor is passed through the second inner tube under the influence of a fluid flow.

Each second signal conductor can for instance extend substantially throughout the length (e.g., at least throughout the length) of the second tube, after being passed through that tube. For that matter, the second tube can also extend substantially throughout the length (e.g., at least throughout the length) of an optional bundle holder, for instance an above-mentioned outer tube or the like.

After installation of the second signal conductor(s), respective end users can be switched over so as to be connected to the second signal conductor(s) for the purpose of communication. The disconnected first signal conductors can for instance remain behind in the network, in unused condition, for instance as back-up signal conductors. In addition, the first signal conductors may for instance remain active, and, for instance, remain connected or be connected to communication means or other means of the respective end user, for transmitting signals (e.g., communication signals, television signals, telephone signals, audio and/or video signals, and/or other signals). In the latter case, an end user may be connected via both a first and a second signal conductor to respective network means, for simultaneous signal transfer via the first and second signal conductor.

Furthermore, the invention provides a communication network, for instance installed by means of a method according to the invention, the network being at least provided with:
- a bundle comprising several first tubes and a second tube;
- several first signal conductors, of a first conductor type, which are associated with network end users, and extend through the first tubes;
- branches to pass the signal conductors to respective end users;
- wherein the second tube of the bundle does not contain a first signal conductor,
wherein the network is characterized in that
- at least one second signal conductor, of a second conductor type which differs from the first conductor type, has been passed through the second inner tube, the second signal conductor being associated with a network end user which is already associated with a first signal conductor.

With advantage, at least as many second signal conductors are arranged in the second tube as the number of first signal conductors extending through the respective first tubes. The bundle of first and second tubes can for instance include different (e.g., two) second tubes, in which case preferably at least as many second signal conductors are arranged in the second tubes as the number of first signal conductors extending through the respective first tubes.

Further elaborations of the invention are described in the subclaims. The invention will presently be further elucidated on the basis of an exemplary embodiment and the drawings. In the drawings:
Figure 1 schematically shows a communication network;
Figure 2 schematically shows a cross section of a part of the network;
Figure 3 shows a part of the network, in a first step of an exemplary embodiment of the present invention;
Figure 4 shows a cross section, as in Fig. 3, in the first step of an exemplary embodiment of the present invention;
Figure 5 schematically shows a side elevational view of a branch part of the network in a cutaway representation; and
Figure 6 shows a side elevational view similar to Fig. 5, after installation of a second branch inner tube and after feeding through of a branch portion of the second signal conductor.

Like or corresponding features are denoted in this application with like or corresponding reference signs.

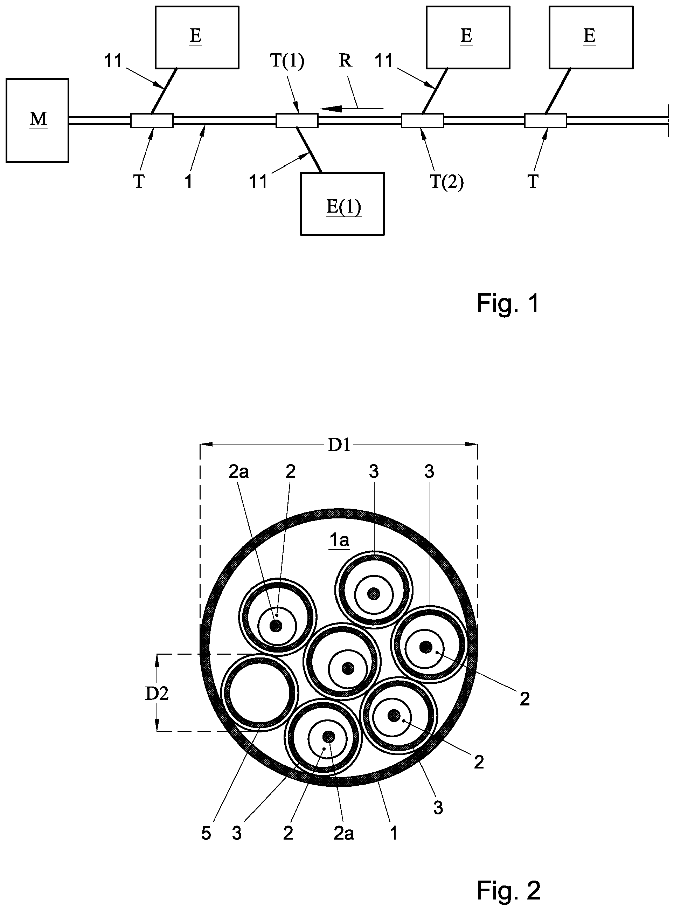

Figs. 1, 2 schematically show a part of a communication network, in particular a Flashnet. The network part is configured for communication between a number of network end users E (e.g., local communication means belonging to houses or the like) and network means M (comprising, e.g., one or more communication lines, one or more patch stations, one or more network intermediate stations and/or one or more network distribution stations, one or more network servers, and/or other network means).

The network part shown comprises at least a bundle of tubes including first tubes 3 and a second tube 5, and - in this example - at least one bundle holder 1. The bundle holder 1 can be implemented in different manners, and, for instance, comprise an outer tube (as in a Flashnet), comprise one or more sleeves (e.g., a single elongate sleeve or a series of sleeves), one or more binders, tape, a skin, and/or a combination of these or other bundle holders.

In the example, the bundle holder comprises at least one hollow outer tube 1. The outer tube 1 is provided with several first inner tubes 3 extending through an interior 1a of the outer tube 1 (see Fig. 2).

Several first signal conductors 2, of a first conductor type, associated with network end users E, extend through the first (inner) tubes 3. Outer tube branches T are provided to pass the signal conductors 2 to respective end users E.

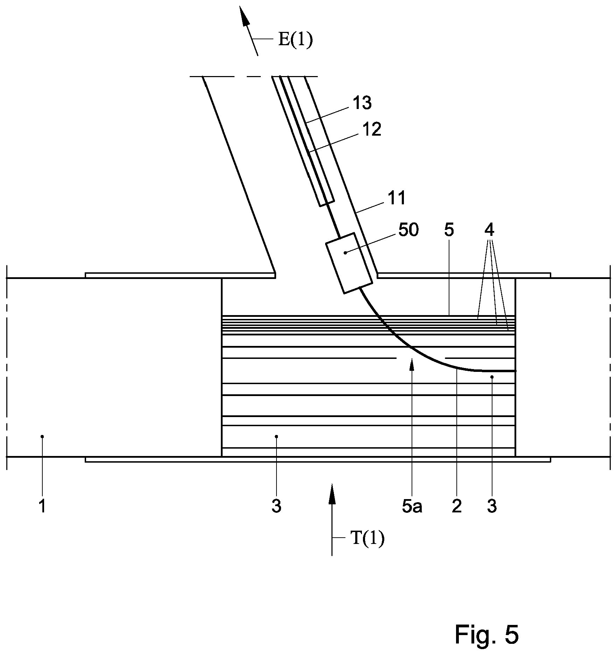

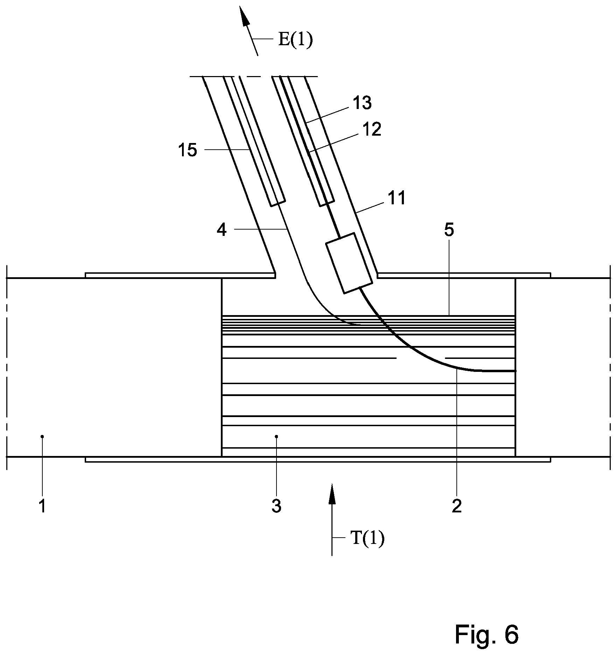

An above-mentioned branch comprises, for instance, a branch outer tube 11 (see Figs. 1, 5, 6), with a branch signal conductor 12 extending therethrough, which is associated with a first signal conductor 2. As Fig. 5 shows, a first signal conductor 2 may be brought into communicative connection with a respective branch signal conductor 12, for instance by means of a local coupling means 50. Further, the branch signal conductor 12 may be passed through the branch outer tube 11 to the end user E via a respective inner tube 13.

In addition, the represented part of the Flashnet is provided with an empty second (likewise hollow) inner tube 5 (i.e., a second tube 5) extending through the outer tube 1, along the branches T, which does not contain a first signal conductor.

In this network known per se, the first signal conductors 2 are, for instance, out-of-date signal conductors, which are due for replacement. They are, for instance, signal conducting cables having a copper signal conducting core 2a.

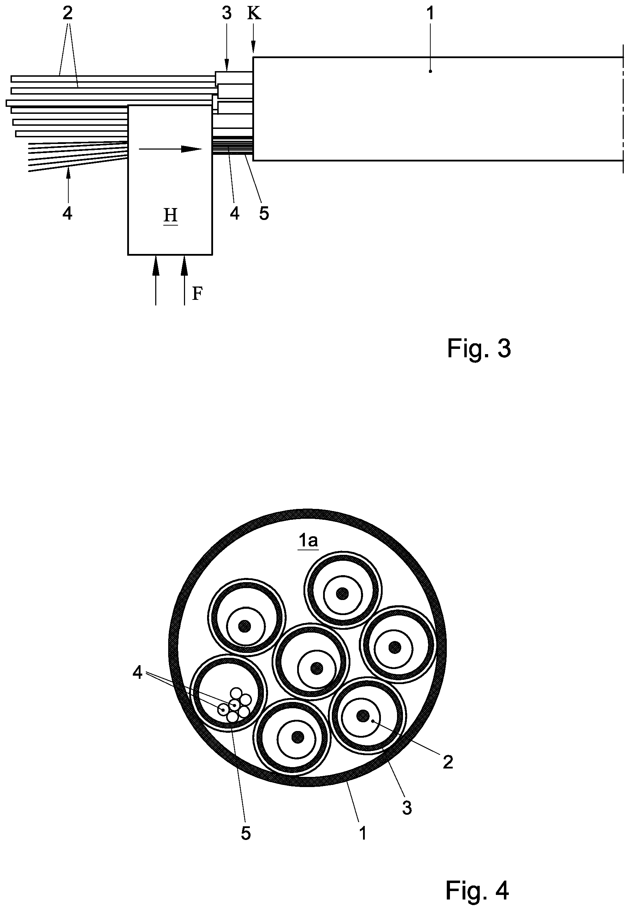

According to the present invention, to this end, advantageously, at least one second signal conductor 4, of a second conductor type which is different from the first conductor type, is passed through the second (inner) tube 5, wherein the second signal conductor 4 is associated with a network end user E which is already provided with a first signal conductor 2. This is schematically represented in Figs. 3-6.

Fig. 3 shows in particular the insertion into the second inner tube of a number of second signal conductors 4, for instance jointly, simultaneously, in a bundle of loose signal conductors 4. The second signal conductors 4, after insertion, are preferably substantially loosely arranged in the respective second inner tube 5 (at least, are not directly fixed to that second inner tube 5).

Preferably, the second signal conductors 4 are so installed in the second inner tube that all those conductors extend along several branches T of the outer tube 1. After being fed through, each second signal conductor 4 may extend, for instance, substantially throughout the length of the second inner tube 5, and preferably substantially throughout the length of the protective outer tube 1.

The outer tube 1 is typically relatively long, having a length of, for instance, at least 100 meters, and in certain cases, for instance, about at least 400 meters or at least 1 km. A second signal conductor 4 can then likewise have a length of at least 100 meters, for instance, (at least) about 400 meters or at least about 1 km.

In addition, different second signal conductors 4 may extend over different distances through the outer tube 1 and respective inner tubes 5. The length of a second signal conductor 4 is in any case preferably such that this signal conductor 4, from an outer tube insertion position K, can reach a predetermined end user E, or a branch T to such predetermined end user E, to enable, if required, installation of a communication connection with such predetermined end user E via that conductor 4.

According to a further elaboration, each second signal conductor 4 is passed through the second inner tube 5 under the influence of a fluid flow. Fig. 3 schematically shows utilization of a blowing device H which is configured to blow air F into a linked-up second inner tube 5, and thus (under the influence of flow resistance and pressure difference) to drag the second signal conductors 4 through the tube 5. Such a device and method, for blowing a signal conductor through a tube, are in themselves generally known (see, for instance, the Plumett MicroJet device). After feeding in and feeding through, proximal parts of the second signal conductors 4 may still stick out from a proximal end of the second inner tube 5 (at the insertion position K shown) to be brought into communication connection with remaining network parts M.

According to an extra advantageous elaboration, at least as many second signal conductors 4 are arranged in the second inner tube 5 as the number of first signal conductors 2 extending through the respective first inner tubes 3. Thus, the present example is provided with six first inner tubes 3, each including one first signal conductor 2. In this case, at least six second signal conductors 4 are inserted into the second inner tube 5.

As mentioned, the first signal conductors 2 may, for instance, each be provided with a copper core 2a to conduct electrical signals; the second signal conductors 4 preferably comprise optical fibers for the purpose of conducting optical signals.

Each second signal conductor 4 may, for instance, comprise one or more signal conducting glass fibers, a glass fiber bundle, or the like. The signal conductor 4 as such can comprise, for instance, one or more signal conducting cores, arranged in a suitable protective sheath. Each second signal conductor 4 may be manufactured from one material, or consist of more materials. Each second signal conductor 4 may be, for instance, of solid design, and/or is preferably flexible.

The different second conductors 4 are preferably provided with markings to allow the conductors 4 to be distinguished from each other, e.g., by means of color codes and/or text provided on the conductors 4.

According to a further elaboration, outer tube 1 is circular cylindrical, having an external side and internal side each having a circular cross section. An outer diameter D1 of the outer tube 1 is, for instance, about 40 mm. An inner diameter of the outer tube 1 (i.e., of the interior 1a) is, for instance, 32 mm. The outer tube 1 may also be implemented in a different manner.

The inner tubes 3, 5, also called microducts, are each, for instance, likewise circular cylindrical. An inner tube outer diameter D2 is considerably smaller than the outer tube inner diameter, for instance by a factor of at least three. According to a further elaboration, the inner tube outer diameter D2 is about 7 mm. Further, each inner tube 3, 5 has an interior of a diameter in the range of, for instance, 5-6 mm, for instance, about 5.5 mm.

The second signal conductors 4 can each have a relatively small cross dimension relative to a cross dimension of a first signal conductor (see Fig. 4). The second signal conductors 4 are, for instance, circular cylindrical conductors, having a relatively small outer diameter of about 1.5 mm or less, for instance, about 1 mm or less.

It will be clear that the above-mentioned dimensions represent only non-limiting examples and that other dimensions can be used as well.

In particular, the second signal conductor 4 is installed during a network operating period, in which period the respective network end user E is in communication connection with the network via the respective first signal conductor 2.

Thus, a communication network is obtained, comprising the at least one outer tube 1, several first inner tubes 3 extending through the outer tube 1, several first signal conductors 2, of the first conductor type, which are associated with network end users E, and extend through the first inner tubes 3, and the outer tube branches T to pass the signal conductors 2 to respective end users E. The second inner tube 5, extending through the outer tube 1, along the branches T, and which does not include a first signal conductor, is provided with the second signal conductors 4, of the second conductor type. The second signal conductors 4 can be associated with network end users E which are already associated with a first signal conductor 2.

The thus obtained communication network can subsequently be used to switch over one or more end users E at suitable moments from communication via a respective first signal conductor to communication via a respective second signal conductor, while inconvenience (such as signal interruption) to those and other end users E remains limited as far as possible.

During use, the outer tube 1 can be opened at a branch T (e.g., a first branch T(1)) to a respective end user E(1) (see Fig. 3) to access a second signal conductor 4 extending along that branch (see Fig. 5), and preferably to pass it through to the end user E(1). The respective second inner tube 5 can for instance be opened locally (see opening 5a in Fig. 5) to access the second signal conductor 4.

A branch portion of the second signal conductor 4 may, for instance, be simply pulled back out of the second inner tube 5 locally (via an above-mentioned opening 5a of the second inner tube 5), then to be passed to the respective end user E.

According to a further elaboration, to this end, for instance, the same second signal conductor 4 may additionally be accessed at a distance from the first branch T(1) (e.g., at a neighboring second branch T(2)), in particular to cut the signal conductor 4 at that second position T(2). A portion of the second signal conductor extending between the first branch T(1) and second position T(2) can then serve as a retraction portion, to be pulled out of the inner and outer tube 5, 1 at the first branch T(1) in a direction R (then to be passed as a branch portion to the respective end user E(1)).

According to an extra advantageous elaboration, in addition, an (extra) branch inner tube 15 is passed through the branch outer tube 11, while a portion of the second signal conductor 4 to be linked up is passed through the branch inner tube 15, for connection to the respective end user E. Such a second branch inner tube can comprise, for instance, a flexible, relatively narrow tube, for instance, a microduct.

After the second signal conductor 4 has been passed to the respective end user E(1), the end user can be connected to that signal conductor 4, for the purpose of communication with the network via that conductor 4. Optionally, the end user E(1) concerned can be decoupled from the respective first signal conductor 2, but this is not requisite. The switch-over to, or at least connection to, the second signal conductor 4 can be done relatively fast without the end user E(1) thereby experiencing prolonged network interruptions, and without any inconvenience to the other network users E (which are linked up via respective branches and the same tube combination 1, 3, 5 and first and/or second signal conductors 2, 4).

The invention thus offers a method and a network with which relatively fast, simply and efficiently a switch can be made between communication via one (e.g., out-of-date) type of conductor 2 and communication via the second signal conductors 4, in particular in a Flashnet part 1 extending along end users over a relatively great distance (such as, for instance, 400 meters or more).

To those skilled in the art it will be clear that the invention is not limited to the exemplary embodiments described. Various modifications are possible within the scope as defined in the appended claims.

## Claims

1. A method for adapting a communication network, the network being at least provided with:
- a bundle of tubes (3, 5), for instance, several tubes (3) extending through a bundle holder (1), the bundle (3, 5) comprising several first tubes (3) and a second tube (5);
- several first signal conductors (2), of a first conductor type, which are associated with network end users (E), and extend through the first tubes (3);
- branches (T) to pass the signal conductors (2) to respective end users (E);
- wherein the second tube (5) extends along said branches (T) and does not contain a first signal conductor,
**characterized in that** at least one second signal conductor (4), of a second conductor type which differs from said first conductor type, is passed through the second tube (5), wherein the second signal conductor (4) is associated with a network end user (E) which is already provided with a said first signal conductor (2).

2. A method according to claim 1, wherein the second signal conductor (4) is installed during a network operating period, in which period the respective network end user (E) is in communication connection with the network via the respective first signal conductor (2).

3. A method according to any one of the preceding claims, wherein each said second signal conductor (4) is passed along several branches.

4. A method according to any one of the preceding claims, wherein a branch portion of the second signal conductor (4) is retracted locally from the second tube (5), then to be passed to the respective end user (E).

5. A method according to any one of the preceding claims, wherein a said branch comprises a branch outer tube (11), with a branch signal conductor extending therethrough which is associated with a said first signal conductor (2), wherein a branch inner tube (15) is passed through the branch outer tube (11), wherein a portion of a said second signal conductor (4) is passed through the branch inner tube (15) for connection to the respective end user (E).

6. A method according to claim 5, wherein the branch signal conductor extends through a branch inner tube (13) which is already in the branch outer tube (11).

7. A method according to any one of the preceding claims, wherein at least as many second signal conductors (4) are arranged in the second tube (5) as the number of first signal conductors (2) extending through the respective first tubes (3).

8. A method according to any one of the preceding claims, wherein several second signal conductors (4) are arranged in the second tube (5) at the same time.

9. A method according to any one of the preceding claims, wherein each second signal conductor (4) is passed through the second tube (5) under the influence of a fluid flow.

10. A method according to any one of the preceding claims, wherein each second signal conductor (4) extends substantially throughout the length of the second tube (5) after being passed through that tube.

11. A method according to any one of the preceding claims, wherein the first signal conductors are each provided with a copper core to conduct electrical signals, wherein the second signal conductors comprise optical fibers for the purpose of conducting optical signals.

12. A communication network, for instance installed by means of a method according to any one of the preceding claims, at least provided with:
- a bundle of several first tubes (3) and a second tube (5);
- several first signal conductors (2), of a first conductor type, which are associated with network end users (E), and extend through the first tubes (3);
- branches (T) to pass the signal conductors (2) to respective end users (E);
- wherein the second tube (5) does not contain a first signal conductor,
wherein the network is **characterized in that**:
- at least one second signal conductor (4), of a second conductor type which differs from said first conductor type, has been passed through the second tube (5), the second signal conductor (4) being associated with a network end user (E) which is already associated with a said first signal conductor (2).

13. A network according to claim 12, wherein at least as many second signal conductors (4) are arranged in the second tube (5) as the number of first signal conductors (2) extending through the respective first tubes (3).

14. A network according to claim 12 or 13, wherein the said bundle extends through a bundle holder, for instance, an outer tube, sleeve, skin, or one or more binders.

15. A network according to any one of claims 12-14, wherein the first tubes (3) and the second tube (5) comprise a bundle of mutually loose tubes.

## Patentansprüche

1. Verfahren zur Anpassung eines Kommunikationsnetzwerks, das Netzwerk mindestens versehen mit:
- einem Bündel von Röhren (3, 5), zum Beispiel mehreren Röhren (3), verlaufend durch einen Bündelhalter (1), das Bündel (3, 5) umfassend mehrere erste Röhren (3) und eine zweite Röhre (5);
- mehreren ersten Signalleitern (2) eines ersten Leitertyps, die Netzwerk-Endbenutzern (E) zugeordnet sind und durch die ersten Röhren (3) verlaufen;
- Zweigen (T), um die Signalleiter (2) zu entsprechenden Endbenutzern (E) zu führen;
- wobei die zweite Röhre (5) entlang der Zweige (T) verläuft und keinen ersten Signalleiter enthält;
**dadurch gekennzeichnet, dass** mindestens ein zweiter Signalleiter (4) eines zweiten Leitertyps, der sich von dem ersten Leitertyp unterscheidet, durch die zweite Röhre (5) geführt wird, wobei der zweite Signalleiter (4) einem Netzwerk-Endbenutzer (E) zugeordnet ist, der bereits mit einem der ersten Signalleiter (2) versehen ist.

2. Verfahren nach Anspruch 1, wobei der zweite Signalleiter (4) während einer Netzwerkbetriebsperiode installiert ist, in welcher Periode der jeweilige Netzwerk-Endbenutzer (E) über den entsprechenden ersten Signalleiter (2) in Kommunikationsverbindung mit dem Netzwerk ist.

3. Verfahren nach einem der vorhergehenden Ansprüche, wobei jeder der zweiten Signalleiter (4) entlang mehrerer Zweige geführt wird.

4. Verfahren nach einem der vorhergehenden Ansprüche, wobei ein Zweigabschnitt des zweiten Signalleiters (4) lokal von der zweiten Röhre (5) zurückgezogen wird, um dann zu dem entsprechenden Endbenutzer (E) geführt zu werden.

5. Verfahren nach einem der vorhergehenden Ansprüche wobei einer der Zweige eine Zweigaußenröhre (11) mit einem durch diese verlaufenden Zweigsignalleiter umfasst, der einem der ersten Signalleiter (2) zugeordnet ist, wobei eine Zweiginnenröhre (15) durch die Zweigaußenröhre (11) geführt wird, wobei ein Abschnitt eines der zweiten Signalleiter (4) durch die Zweiginnenröhre (15) für die Verbindung mit dem entsprechenden Endbenutzer (E) geführt wird.

6. Verfahren nach Anspruch 5, wobei der Zweigsignalleiter durch eine Zweiginnenröhre (13) verläuft, die bereits in der Zweigaußenröhre (11) ist.

7. Verfahren nach einem der vorhergehenden Ansprüche, wobei mindestens so viele zweite Signalleiter (4) in der zweiten Röhre (5) angeordnet sind wie die Anzahl der ersten Signalleiter (2), verlaufend durch die entsprechenden ersten Röhren (3).

8. Verfahren nach einem der vorhergehenden Ansprüche, wobei mehrere zweite Signalleiter (4) gleichzeitig in der zweiten Röhre (5) angeordnet sind.

9. Verfahren nach einem der vorhergehenden Ansprüche, wobei jeder zweite Signalleiter (4) unter dem Einfluss eines Flüssigkeitsstroms durch die zweite Röhre (5) geführt wird.

10. Verfahren nach einem der vorhergehenden Ansprüche, wobei jeder zweite Signalleiter (4) im Wesentlichen durch die Länge der zweiten Röhre (5) verläuft, nachdem er durch diese Röhre geführt wird.

11. Verfahren nach einem der vorhergehenden Ansprüche, wobei die ersten Signalleiter jeweils mit einem Kupferkern zum Leiten elektrischer Signale versehen sind, wobei die zweiten Signalleiter optische Fasern umfassen, die zum Leiten optischer Signale dienen.

12. Kommunikationsnetzwerk, zum Beispiel installiert mittels eines Verfahrens nach einem der vorhergehenden Ansprüche, mindestens versehen mit:
- einem Bündel von mehreren ersten Röhren (3) und einer zweiten Röhre (5);
- mehreren ersten Signalleitern (2) eines ersten Leitertyps, die Netzwerk-Endbenutzern (E) zugeordnet sind und durch die ersten Röhren (3) verlaufen;
- Zweigen (T), um die Signalleiter (2) zu entsprechenden Endbenutzern (E) zu führen;
- wobei die zweite Röhre (5) keinen ersten Signalleiter enthält, wobei das Netzwerk **dadurch gekennzeichnet ist, dass**:
- mindestens ein zweiter Signalleiter (4) eines zweiten Leitertyps, der sich von dem ersten Leitertyp unterscheidet, durch die zweite Röhre (5) geführt wurde, welcher zweite Signalleiter (4) einem Netzwerk-Endbenutzer (E) zugeordnet ist, der bereits einem der ersten Signalleiter (2) zugeordnet ist.

13. Netzwerk nach Anspruch 12, wobei mindestens so viele zweite Signalleiter (4) in der zweiten Röhre (5) angeordnet sind wie die Anzahl der ersten Signalleiter (2), verlaufend durch die entsprechenden ersten Röhren (3).

14. Netzwerk nach Anspruch 12 oder 13, wobei das Bündel durch einen Bündelhalter verläuft, zum Beispiel eine Außenröhre, eine Hülse, einen Mantel, oder einen oder mehrere Binder.

15. Netzwerk nach einem der Ansprüche 12-14, wobei die ersten Röhren (3) und die zweite Röhre (5) ein Bündel von zueinander losen Röhren umfassen.

## Revendications

1. Procédé pour adapter un réseau de communication, le réseau étant au moins pourvu de :
un faisceau de tubes (3, 5), par exemple, plusieurs tubes (3) s'étendant à travers un support de faisceau (1), le faisceau (3, 5) comprenant plusieurs premiers tubes (3) et un second tube (5) ;
plusieurs premiers conducteurs de signal (2), d'un premier type de conducteur, qui sont associés avec des utilisateurs finaux de réseau (E), et s'étendent à travers les premiers tubes (3) ;
des embranchements (T) pour faire passer les conducteurs de signal (2) vers des utilisateurs finaux (E) respectifs ;
dans lequel le second tube (5) s'étend le long desdits embranchements (T) et ne contient pas un premier conducteur de signal,
**caractérisé en ce qu'**au moins un second conducteur de signal (4), d'un second type de conducteur qui diffère dudit premier type de conducteur, est passé à travers le second tube (5), dans lequel le second conducteur de signal (4) est associé à un utilisateur final de réseau (E) qui est déjà pourvu d'un dit premier conducteur de signal (2).

2. Procédé selon la revendication 1, dans lequel le second conducteur de signal (4) est installé pendant une période de fonctionnement de réseau, dans laquelle période l'utilisateur final de réseau (E) respectif est en connexion de communication avec le réseau via le premier conducteur de signal (2) respectif.

3. Procédé selon l'une quelconque des revendications précédentes, dans lequel chaque dit second conducteur de signal (4) est passé le long de plusieurs embranchements.

4. Procédé selon l'une quelconque des revendications précédentes, dans lequel une partie d'embranchement du second conducteur de signal (4) est rétractée localement du second tube (5), pour être ensuite passé vers l'utilisateur final de réseau (E).

5. Procédé selon l'une quelconque des revendications précédentes, dans lequel un dit embranchement comprend un tube extérieur d'embranchement (11), avec un conducteur de signal d'embranchement s'étendant à travers lui avec un dit premier conducteur de signal (2), dans lequel un tube intérieur d'embranchement (15) est passé à travers le tube extérieur d'embranchement (11), dans lequel une partie d'un dit second conducteur de signal (4) est passée à travers le tube intérieur d'embranchement (15) pour connexion à l'utilisateur final de réseau (E).

6. Procédé selon la revendication 5, dans lequel le conducteur de signal d'embranchement s'étend à travers un tube intérieur d'embranchement (13) qui est déjà dans le tube extérieur d'embranchement (11).

7. Procédé selon l'une quelconque des revendications précédentes, dans lequel au moins autant de seconds conducteurs de signal (4) sont agencés dans le second tube (5) que le nombre de premiers conducteurs de signal (2) s'étendant à travers les premiers tubes (3) respectifs.

8. Procédé selon l'une quelconque des revendications précédentes, dans lequel plusieurs seconds conducteurs de signal (4) sont agencés dans le second tube (5) en même temps.

9. Procédé selon l'une quelconque des revendications précédentes, dans lequel chaque second conducteur de signal (4) est passé à travers le second tube (5) sous l'influence d'un écoulement de fluide.

10. Procédé selon l'une quelconque des revendications précédentes, dans lequel chaque second conducteur de signal (4) s'étend sensiblement sur toute la longueur du second tube (5) après être passé à travers ce tube.

11. Procédé selon l'une quelconque des revendications précédentes, dans lequel les premiers conducteurs de signal sont chacun pourvus d'un coeur de cuivre pour conduire des signaux électriques, dans lequel les seconds conducteurs de signal comprennent des fibres optiques destinées à conduire des signaux optiques.

12. Réseau de communication, par exemple installé au moyen d'un procédé selon l'une quelconque des revendications précédentes, au moins pourvu de :
un faisceau de plusieurs premiers tubes (3) et un second tube (5) ;
plusieurs premiers conducteurs de signal (2), d'un premier type de conducteur, qui sont associés avec des utilisateurs finaux de réseau (E), et s'étendent à travers les premiers tubes (3) ;
des embranchements (T) pour faire passer les conducteurs de signal (2) vers des utilisateurs finaux (E) respectifs ;
dans lequel le second tube (5) ne contient pas un premier conducteur de signal,
dans lequel le réseau est **caractérisé en ce que** :
au moins un second conducteur de signal (4), d'un second type de conducteur qui diffère dudit premier type de conducteur, a été passé à travers le second tube (5), le second conducteur de signal (4) étant associé à un utilisateur final de réseau (E) qui est déjà associé à un dit premier conducteur de signal (2).

13. Réseau selon la revendication 12, dans lequel au moins autant de seconds conducteurs de signal (4) sont agencés dans le second tube (5) que le nombre de premiers conducteurs de signal (2) s'étendant à travers les premiers tubes (3) respectifs.

14. Réseau selon la revendication 12 ou 13, dans lequel ledit faisceau s'étend à travers un support de faisceau, par exemple, un tube extérieur, un manchon, une gaine, ou un ou plusieurs liants.

15. Réseau selon l'une quelconque des revendications 12-14, dans lequel les premiers tubes (3) et le second tube (5) comprennent un faisceau de tubes mutuellement lâches.
